# EUROPÄISCHE PATENTANMELDUNG

(11) **EP 3 501 722 A1**
(43) Veröffentlichungstag der Anmeldung: **26.06.2019**
(21) Anmeldenummer: 18213370.2
(22) Anmeldetag: 18.12.2018
(51) Int. Cl.: B23K 26/00, B23K 26/38, B23K 26/082, B21D 28/02

(54) **STANZMASCHINE MIT EINEM STANZWERKZEUG**

(30) Priorität: 21.12.2017 DE 102017130883
(71) Anmelder: Germania-Werk Schubert GmbH & Co. KG, 12359 Berlin (DE)
(72) Erfinder: Hüyüktepe, Tamer, 10783 Berlin (DE)
(74) Vertreter: Meinke, Jochen

(57) **Zusammenfassung**

Die Erfindung betrifft eine Stanzmaschine (1) mit wenigstens einem Stanzwerkzeug, das wenigstens einen Stempel und wenigstens eine Matrize aufweist. Um komplexe Konturen auch in kleinen Stückzahlen bei Bedarf flexibel anfertigen zu können, weist die Stanzmaschine (1) einen mobilen Remote-Laserschneidkopf (2) mit wenigstens einer Laserstrahlungsquelle (3) auf. Der mobile Remote-Laserschneidkopf (2) ist mit wenigstens zwei schwenkbar gelagerten Spiegeln (23, 24) ausgestattet, ebenso wie mit einer Linse (4) zur Fokussierung des Laserstrahls auf der Blechoberfläche.

## Beschreibung

Die Erfindung betrifft eine Stanzmaschine mit wenigstens einem Stanzwerkzeug, welches wenigstens einen Stempel und wenigstens eine Matrize aufweist. Derartige Stanzautomaten sind in der Industrie weit verbreitet, werden aber dem Bedürfnis nach variablen Blechkonturen, mit dem sinkende Losgrößen insbesondere im Dünnblechbereich einhergehen, zunehmend nicht mehr gerecht.

Um komplexe Konturen auch in kleinen Stückzahlen bei Bedarf flexibel anfertigen zu können, sieht die vorliegende Erfindung vor, dass die Stanzmaschine einen mobilen Remote-Laser-Schneidkopf mit wenigstens einer Laserstrahlungsquelle aufweist. Mit einem derartigen flexibel einsetzbaren, mobilen Remote-Laser-Schneidkopf bzw. Laserscanner-Bearbeitungskopf können bei Bedarf entsprechende komplexe Konturen auch in kleineren Stückzahlen flexibel im Remote-Laser-Schneidverfahren in oder an einer konventionellen Stanzmaschine ausgeführt werden.

Hierzu wird ein bestehender Remote-Laser-Schneidkopf, z.B. der Firma Black Bird mit der Bezeichnung "intelliSCAN FT", in die vorhandene Steuerung und Automation einer Stanzmaschine integriert. Der bereits existierende Stanzautomat kann dann sowohl im konventionellen Betrieb mit Stempel und Matrize als auch wahlweise mit der mobilen Remote-Laserschneideinheit im Remote-Laser-Schneidverfahren arbeiten.

Bevorzugt ist, dass der mobile Remote-Laser-Schneidkopf wenigstens zwei schwenkbar gelagerte Spiegel aufweist. Hierdurch wird der Laserstrahl über die motorisch bewegten Spiegel abgelenkt. Zur Fokussierung weist er eine Linse auf, bevorzugt eine "F-Theta-Linse" und/oder eine "Telezentrische-F-Theta-Linse" (Planfeldlinse). Mit einer solchen "Planfeldlinse" bzw. "Telezentrische-F-Theta-Linse" wird der Laserstrahl auf der Blechoberfläche fokussiert und kann mit hoher Geschwindigkeit entlang einer programmierten Kontur bewegt werden.

Im Arbeitsbereich der "F-Theta-Linse", der abhängig von der Brennweite der verwendeten "F-Theta-Linse" ist, können alle möglichen Konturen aus dünnen Metallblechen, insbesondere bei einer Dicke von 0,01 mm bis 1,0 mm, ausgeschnitten werden. Hierbei können Konturgenauigkeiten, in Abhängigkeit von dem verwendeten Material und der Blechstärke, im Bereich von wenigen hundertstel Millimetern erreicht werden. Die Schneidgeschwindigkeit liegt ihrerseits bei mehreren Metern pro Minute, beispielsweise bis zu hundert Metern pro Minute, abhängig von Materialart und Blechstärke.

Der Arbeitsbereich des Remote-Laser-Schneidkopfes ist abhängig von der Brennweite der eingesetzten, austauschbaren "F-Theta-Linse" bzw. "Telezentrischen F-Theta-Linse". Um bei größeren Blechstärken im Bereich von 0,2 mm bis 1,0 mm senkrechte Schnittflächen zu erhalten, werden vorzugweise "telezentrische F-Theta-Linsen" statt einfacher "F-Theta-Linsen" eingesetzt.

Der Arbeitsbereich von Remote-Laser-Schneidköpfen ist abhängig von der eingesetzten Brennweite der "F-Theta-Linse" bzw. "telezentrischen F-Theta-Linse". Hierzu kann der Remote-Laser-Schneidkopf an einem zweidimensionalen Linearachsensystem oder einem kleineren Roboter mit mehreren Achsen befestigt werden. Mit dieser Gestaltung können auch größere Bereiche als der von der eigentlichen Linse vorgegebene Arbeitsbereich bearbeitet werden. Für den mobilen Remote-Laser-Schneidkopf ist zudem eine flexible Halterung vorgesehen. Die Stanzmaschine kann in einem Betriebsmodus die Materialbearbeitung mit einem üblichen Stanzwerkzeug (Stempel und Matrize) und wahlweise die Bearbeitung mit dem mobilen Remote-Laser-Schneidkopf vornehmen.

In Ausgestaltung weist die Stanzmaschine auch eine Absaugeinheit und/oder eine Laserschutzwand auf. Da die Laserbearbeitung mit Hochleistungslasern mit hoher Brillanz ausgeführt wird, ist als Umhausung der Anlage als Laserklasse 1 nach DIN EN 60825-1 vorgesehen. Durch das Absaugsystem werden die entstehenden Metalldämpfe zuverlässig abgesaugt.

Vorzugsweise ist der mobile Remote-Laser-Schneidkopf innerhalb der Stanzmaschine angeordnet. Der Scankopf wird über einen verbundenen Industrierechner gesteuert. Mit dem Scankopf ist ein Lichtleitkabel verbunden, um den Laserstrahl von der Laserstrahlquelle (Faserlaser), die mehrere Meter entfernt sein kann, bis zum Scankopf weiter zu leiten. Zudem sind Spannungsversorgung, Kühlwasserleitungen und Datenleitungen mit dem Scankopf verbunden.

Die erfindungsgemäße flexible Halterung ermöglicht die Anbindung des Scankopfes sowie die Einstellung des Arbeitsabstandes, insbesondere die ungefähre Brennweite der "F-Theta-Linse" zur Blechoberfläche. Hierbei kann die flexible Halterung sowohl innerhalb wie auch außerhalb der Stanzmaschine angebunden sein.

Beim temporären Einbau der mobilen Remote-Laserschneideinheit innerhalb der Stanzmaschine kann die flexible Halterung auf unterschiedliche Art und Weise in der Stanzmaschine befestigt werden. So können zur Befestigung starke Magnetfüße genutzt werden, die auf dem Maschinenbett oder an den Seitenwänden der Stanzmaschine angebracht werden. Alternativ kann die Halterung auch an Profile in der Stanzmaschine angeschraubt werden oder an einem mobilen Kragarm in die Stanzmaschine durch die geöffnete Tür hineingeschoben werden.

Die flexible Halterung für den Schneidkopf besteht aus einem flexibel verstellbaren Gelenkarm, dessen Gelenke manuell verstellbar sowie fest versteifbar sind, damit der gesamte Gelenkarm starr wird. Am Ende des Gelenkarms wird der Schneidkopf an einer schwenkbaren Befestigungsplatte angebracht. Der Fuß des Gelenkarms ist entweder mit einem starken, lösbaren Magneten oder mehreren Saugnäpfen oder einem verschraubbaren Profil ausgestattet, um den Gelenkarm in der Stanzmaschine fest zu positionieren. Hierbei wird der Gelenkarm derart eingestellt, dass der Schneidkopf im richtigen Arbeitsabstand (bestimmt durch die Brennweite der F-Theta-Linse) zur Werkstückober-/ Blechoberfläche steht. Der Arbeitsbereich wird durch eine Laserschutzwand abgeschirmt und der Innenraum abgesaugt.

Alternativ kann die mobile Remote-Laser-Schneideinheit auch außerhalb der bestehenden Stanzmaschine angeordnet werden. Hierbei wird die flexible Halterung außerhalb der Stanzmaschine über Magnetfüße angebracht oder an einem Profil angeschraubt. Zudem kann die komplette mobile Remote-Laserschneideinheit an einem mobiles Gestell mit verfahrbarem Kragarm angebracht werden und somit an jeder beliebigen Stelle im Raum positioniert und betrieben werden.

Damit die beim Laserschneidprozess entstehenden Dämpfe und Stäube nicht in das Arbeitsumfeld gelangen und die damit Beschäftigten schädigen können, wird der Arbeitsbereich mit einer Absaugvorrichtung an der mobilen Remote-Laser-schneideinheit abgesaugt, Dämpfe und Stäube werden durch flexible Absaugrohre insbesondere Schläuche an die entfernt untergebrachte Absaugung weitergeleitet.

Die vorgesehene Laserschutzwand besteht aus einem lichtdichten, absorbierenden bzw. reflektierenden Material, insbesondere Metall, wie z.B. Aluminiumblech. Hierbei kann ebenfalls ein Laserschutzfenster eingebaut sein. Die Laserschutzwand kann bei Bedarf auf- und abwärts bewegt werden. Während des Laserschneidprozesses fährt die Laserschutzwand bis auf das Blechband herab. Unterhalb des Blechbandes fährt bei Bedarf ein Gegenstück zur oberen Laserschutzwand auf die Unterseite des Blechbandes, so dass die Laserschutzwand oberhalb und unterhalb des Blechbandes gegen Streustrahlung und Reflexionen abdichtet und schützt. Damit das Blechband nach dem Schneidprozess weitergeführt werden kann, wird die Laserschutzwand wieder vom Blechband wegbewegt. Dabei hebt sich die obere Laserschutzwand, die untere Laserschutzwand senkt sich ab.

Zur weichen Auflage der Laserschutzwand auf dem Blechband können die Endkanten der Laserschutzwand mit Kunststofflippen oder Bürsten ausgerüstet sein.

Zur Observierung des Arbeitsbereichs ist eine Kamera im Scankopf integriert, die zur Positionierung der Schneidkontur dient. Dabei kann ebenso der gesamte Schneidprozess beobachtet und ausgewertet werden.

Die mobile Remote-Laser-Schneideinheit besitzt eine Zuführung von Versorgungsleitungen und Datenleitungen. Hierbei werden das Lichtleitkabel, die Kühlwasserleitungen, das Datenkabel, die Spannungsversorgung und das Absaugrohr mit der mobilen Remote-Laser-Schneideinheit verbunden.

Zum Betrieb werden weitere Versorgungseinheiten wie "Faserlaser", "Kühlung", "Metalldampfabsaugung" und ein "Industrie-Rechner" zur Steuerung des Scankopfes benötigt.

Die Erfindung sieht auch ein Verfahren zur Materialbearbeitung vor, bei dem das Material in einer Stanzmaschine bearbeitet wird, wobei die Bearbeitung wahlweise mit einem Stanzwerkzeug, welches wenigstens einen Stempel und wenigstens eine Matrize aufweist, oder durch einen mobilen Remote-Laser-Schneidknopf mit wenigstens einer Laserstrahlungsquelle erfolgt.

Hierzu stellt die Laserstrahlungsquelle Laserstrahlung bereit, die mit wenigstens zwei schwenkbar gelagerten Spiegeln auf dem Material positionierbar ist, wobei die Schwenkbewegungen der Spiegel unabhängig voneinander einstellbar sind.

Die Funktions- bzw. Wirkungsweise des Scan- bzw. Schneidkopfes ist wie folgt:
Der Scan- bzw. Schneidkopf ist mit mindestens zwei Umlenkspiegeln mit hoher Reflektivität ausgestattet, die rotatorisch, zum Beispiel durch Galvomotoren angetrieben werden. Dadurch sind die Spiegel in der Lage, sehr schnell auf steuerungstechnisch vorgegebene Positionen zu schwenken. Die Spiegel sind derart im Scankopf angeordnet, dass der durch eine lichtdichte Öffnung im Gehäuse des Scankopfes einfallende Laserstrahl auf den ersten Spiegel in der Anordnung trifft und in +/- X-Richtung (Horizontale) abgelenkt werden kann. Der vom ersten Spiegel abgelenkte Strahl trifft auf einen größeren zweiten Spiegel, der ebenfalls durch einen Galvomotor angetrieben, sehr schnell hin und her schwenken kann, jedoch in +/- Y-Richtung (Vertikale). Dadurch beschreibt der auf die F-Theta-Linse (Planfeldlinse) bzw. telezentrische F-Theta-Linse (Planfeldlinse, bei der der fokussierte Laserstrahl senkrecht auf die Werkstückoberfläche trifft) treffende Laserstrahl eine Bewegung in X- und Y-Richtung auf der F-Theta-Linse. Der Laserstahl wird durch die F-Theta-Linse auf einer durch die Brennweite der F-Theta-Linse bestimmten Arbeitsfläche fokussiert. Außerhalb der Arbeitsfläche verändert sich die Fokusform und -größe, innerhalb der Arbeitsfläche bleibt die Fokusform und -größe konstant. Mit dem durch die Umlenkspiegel abgelenkten und durch die F-Theta-Linse bzw. telezentrische F-Theta-Linse fokussierten bzw. gebündelten Laserstrahl kann auf der Arbeitsfläche jede beliebige Kontur auf einer Fläche abgefahren bzw. lasergeschnitten werden.

Vorzugsweise propagiert die Laserstrahlung vor dem Auftreffen auf dem Material durch wenigstens eine Linse. Diese ist entweder eine "F-Theta-Linse" und/oder eine "telezentrische F-Theta-Linse", um die Laserstrahlung auf dem Material zu fokussieren. Die Position des mobilen Remote-Laser-Schneidkopfes kann innerhalb der Stanzmaschine variieren.

Die Erfindung ist nachstehend anhand der Zeichnung näher erläutert. Diese zeigt in
- Fig. 1: eine mobile Remote-Laser-Schneideinheit,
- Fig. 2: eine Anordnung der mobilen Remote-Laser-Schneideinheit innerhalb einer Stanzmaschine,
- Fig. 3: die Anordnung der mobilen Remote-Laser-Schneideinheit außerhalb einer Stanzmaschine,

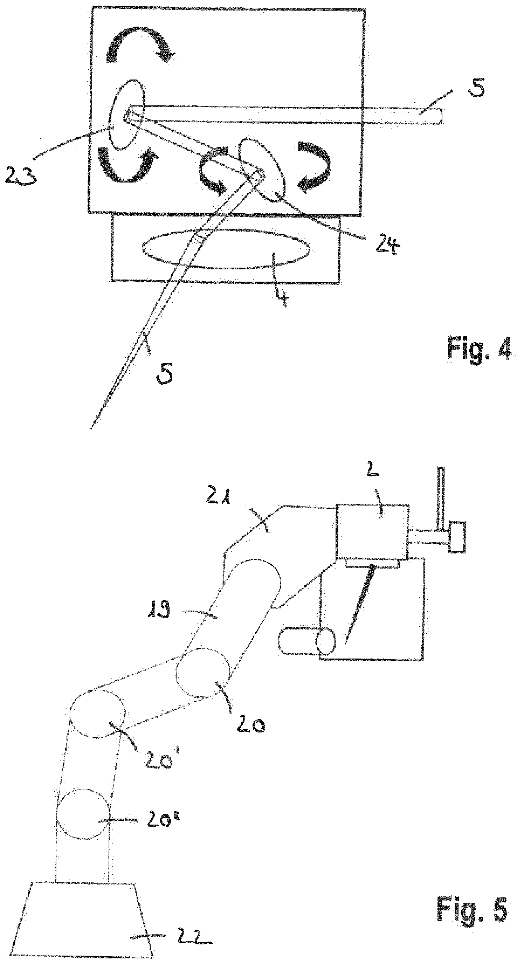

- Fig. 4: eine schematische Ansicht der Umlenkspiegel sowie in
- Fig. 5: eine schematische Ansicht einer flexiblen Halterung für den Schneidkopf.

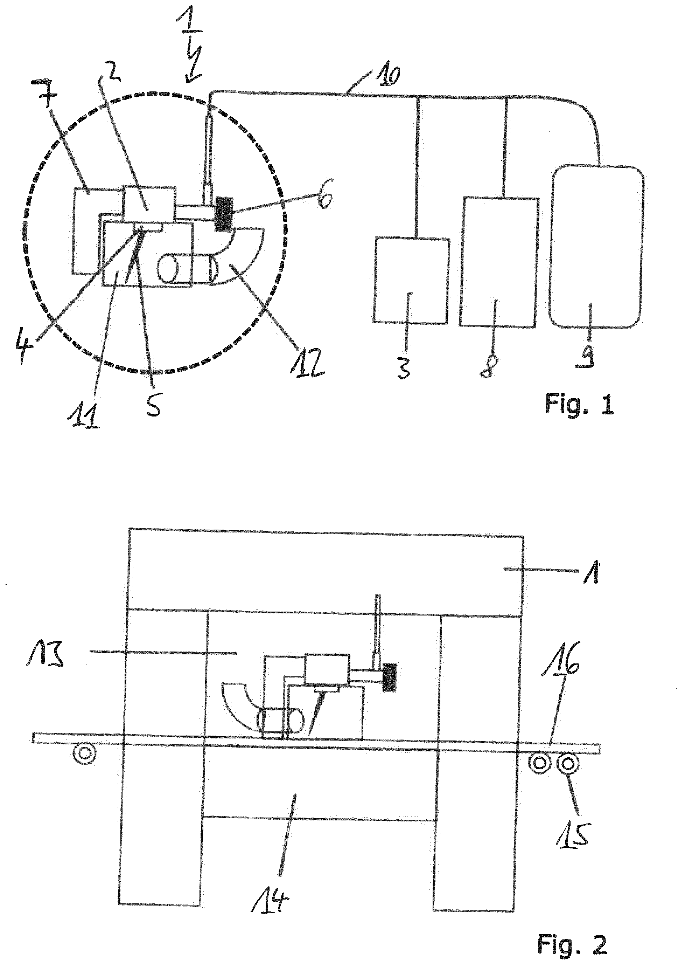

Eine in Figur 1 näher dargestellte mobile Remote-Laser-Schneideinheit 1 weist einen Remote-Laser-Schneidkopf 2 sowie eine Laserstrahlungsquelle 3, zum Beispiel einen Faserlaser 3, auf. Der Remote-Laser-Schneidkopf 2 besitzt wenigstens eine Linse, insbesondere eine F-Theta-Linse oder telezentrische F-Theta-Linse 4, die einen Laserstrahl 5 zur Blechbearbeitung aussendet. Zusätzlich ist eine Beobachtungskamera 6 vorgesehen. Eine flexible Halterung 7 trägt den Remote-Laser-Schneidkopf 2. Sowohl von dem Faserlaser 3 wie auch von einer Kühlvorrichtung 8 und eine Absaugung 9 verlaufen Versorgungsleitungen 10, die lediglich schematisch dargestellt sind und zum Remote-Laser-Schneidkopf 2 führen. Die gesamte Laserschneideinheit 1 ist von einer Laserschutzwand 11 als Einhausung umgeben. Innerhalb dieser befindet sich auch noch eine Absaugeinheit 12 für beim Lasern entstehende Metalldämpfe und dergleichen.

Der Remote-Laser-Schneidkopf 2 wird als Ganzes in die mobile Remote-Laser-Schneideinheit 1 integriert und über einen nicht näher dargestellten, hiermit verbundenen Industrierechner (PC) gesteuert. Ebenfalls ist ein Lichtleitkabel mit dem Schneidkopf 2 verbunden, um den Laserstrahl 5 von der Laserstrahlquelle 3, insbesondere einem Faserlaser 3, der auch mehrere Meter entfernt sein kann, bis zum Einsatzort beziehungsweise Scankopf zu leiten. Zudem sind auch die Spannungsversorgung, Kühlwasserleitungen und Datenleitungen mit dem Schneidkopf 2 verbunden. Der Schneidkopf 2 ist mit zwei Umlenkspiegeln 23 und 24 mit hoher Reflektivität ausgestattet, die rotatorisch, zum Beispiel durch nicht näher dargestellte Galvomotoren angetrieben werden. Der Laserstrahl 5 trifft zunächst auf den ersten Spiegel 23, der ihn in +/-X-Richtung (Horizontale) ablenkt. Der vom ersten Spiegel 23 abgelenkte Strahl 5 trifft anschließend auf einen größeren zweiten Spiegel 24, der ebenfalls durch einen Galvomotor angetrieben wird und in +/-Y-Richtung (Vertikale) schwenken kann. Dadurch beschreibt der auf die F-Theta-Linse (Planfeldlinse) beziehungsweise telezentrische F-Theta-Linse (Planfeldlinse, bei der der fokussierte Laserstrahl senkrecht auf die Werkstückeoberfläche trifft) zu treffender Laserstrahl 5 eine Bewegung in X- und Y-Richtung auf der F-Theta-Linse.

Die flexible Halterung 7 ermöglicht die Anwendung des Schneidkopfes 2 sowie die Einstellung des Arbeitsabstandes, insbesondere der Brennweite der F-Theta-Linse 4 zur Blechoberfläche 16. Hierbei kann die flexible Halterung 7 entweder innerhalb oder außerhalb der Stanzmaschine 1 angebunden werden. In Ausgestaltung ist die flexible Halterung 7 als flexibel verstellbarer Gelenkarm 19 ausgebildet, dessen Gelenke 20, 20', 20" manuell verstellbar sowie fest versteifbar sind, damit der gesamte Gelenkarm 19 starr wird. Am Ende des Gelenkarmes 19 befindet sich eine schwenkbare Befestigungsplatte 21, an der der Schneidkopf 2 angeordnet ist. Der Fuß 22 des Gelenkarms 19 kann mit einem starken, lösbaren Magneten oder mit mehreren Saugnäpfen oder einem verschraubbaren Profil ausgestattet sein, um ihn an der Stanzmaschine 1 fest zu positionieren.

Figur 2 zeigt eine bestehende Stanzmaschine 1 ohne eingebaute Werkzeuge wie Matrize und Stempel. In dem dadurch frei werdenden Bauraum 13a befindet sich der Laser-Schneid-Kopf 2. Die Stanzmaschine 1 weist, ein Bauraum 13, ein Maschinenbett 14 sowie Tragrollen 15 für das zu bearbeitende Blechband 16 auf. Mittels der mobilen Remote-Laser-Schneideinheit 1 kann dieses Blechband 16, das durch die Stanzmaschine 1 hindurchgeführt wird, bearbeitet und ausgeschnitten werden.

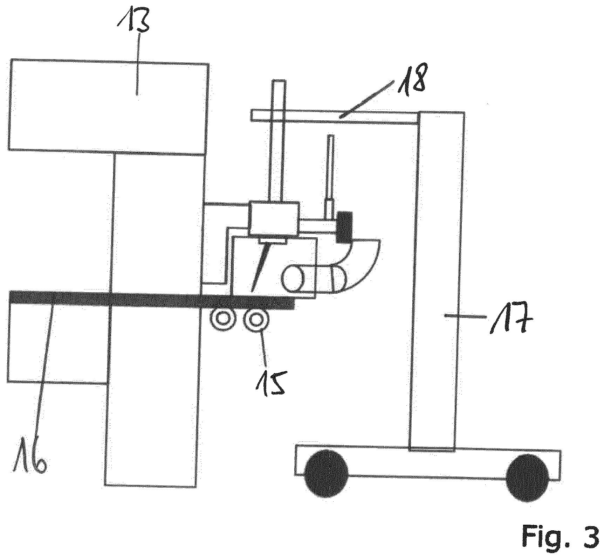

Figur 3 zeigt die Anordnung einer mobilen Remote-Laser-Schneideinheit 1 außerhalb einer bestehenden Stanzmaschine 1. Dabei kommt ein mobiles Gestell 17 mit einem Tragarm 18 zur Anbindung der mobilen Remote-Laser-Schneideinheit 2 und zu deren genauen Positionierung zum Einsatz, und zwar außerhalb des eigentlichen Arbeitsraums 13a einer bestehenden Stanzmaschine 1, in der Matrize und Stempel, wie nicht näher dargestellt ist, belassen werden können, um Umbauarbeiten und -zeiten zu vermeiden.

Damit die beim Laserschneiden entstehenden Dämpfe und Stäube nicht in das Arbeitsumfeld gelangen können, wird der nähere Arbeitsbereich im Bauraum 13 mit einer Absaugvorrichtung 12 an der mobilen Remote-Laser-Schneideinheit 2 abgesaugt und Dämpfe und Stäube werden durch nicht näher dargestellte Absaugrohre beziehungsweise Schläuche an eine entfernt untergebrachte Hauptabsaugung weitergeleitet.

Die Laserschutzwand 11 besteht aus einem lichtdichten, absorbierenden beziehungsweise reflektierenden Material wie Metall, insbesondere Aluminiumblech. Hierbei kann ebenfalls ein Laserschutzfenster in die Laserschutzwand 11 eingebaut sein, um den Arbeitsprozess überwachen zu können. Die Laserschutzwand 11 kann bei Bedarf auf- und abwärtsbewegt werden. Während des Laserschneidprozesses fährt die Laserschutzwand 11 bis auf das Blechband 16 herunter. Unterhalb des Blechbandes 16 fährt bei Bedarf ein Gegenstück zur oberen Laserschutzwand 11 auf die Unterseite des Blechbandes 16, sodass die Laserschutzwand 11 oberhalb und unterhalb des Blechbandes 16 gegen Streustrahlung und Reflektionen abdichtet und schützt. Damit das Blechband 16 nach dem Schneidprozess weitergeführt werden kann, wird die Laserschutzwand 11 vom Blechband 16 wegbewegt, das heißt, die obere Laserschutzwand 11 hebt sich, während sich die untere Laserschutzwand 11 absenkt. Zur weichen Auflage der Laserschutzwand 11 auf dem Blechband 16 können die Endkanten der Laserschutzwand 11 mit Kunststofflippen oder -bürsten ausgerüstet sein. Zur Observierung des Arbeitsbereichs ist in dem Schneidkopf 2 eine Kamera 6 integriert, welche zur Positionierung der Schneidkontur dient. Ebenfalls kann der Schneidprozess beobachtet und ausgewertet werden.

Die mobile Remote-Laser-Schneideinheit 2 besitzt eine Zuführung von Versorgungsleitungen und Datenleitungen 10. Hierbei werden das Lichtleitkabel, die Kühlwasserleitungen, das Datenkabel, die Spannungsversorgung und das Absaugrohr mit der mobilen Remote-Laser-Schneideinheit 2 verbunden.

Für den Betrieb der mobilen Remote-Laser-Schneideinheit 2 werden weiter folgende Versorgungseinheiten benötigt: Faserlaser 3, Kühlung, Absaugung für Metalldämpfe 12 und ein Industrierechner (PC) zur Steuerung des Schneidkopfes. Die Versorgungseinheiten werden über Leitungen 10 wie Laser-Licht-Kabel, Spannungsversorgung, Absaugrohr, Kühlwasser, Daten- und Steuerkabel mit der mobilen Remote-Laser-Schneideinheit 2 verbunden.

Natürlich ist die Erfindung nicht auf die dargestellten Ausführungsbeispiele beschränkt. Weitere Ausgestaltungen sind möglich, ohne den Grundgedanken zu verlassen.

### Bezugszeichenliste:

- 1: Stanzmaschine
- 2: Remote-Laser-Schneidkopf
- 3: Laserstrahlungsquelle
- 4: Telezentrische F-Theta-Linse
- 5: Laserstrahl
- 6: Kamera
- 7: Halterung
- 8: Kühlvorrichtung
- 9: Absaugung
- 10: Versorgungs- und Datenleitungen
- 11: Laserschutzwand
- 12: Absaugeinheit
- 13: Bauraum
- 14: Maschinenbett
- 15: Tragrollen
- 16: Blechband
- 17: Gestell
- 18: Tragarm
- 19: Gelenkarm
- 20: Gelenke
- 21: Befestigungsplatte
- 22: Fuß
- 23: Erster Umlenkspiegel
- 24: Zweiter Umlenkspiegel

## Patentansprüche

1. Stanzmaschine (1) mit wenigstens einem Stanzwerkzeug (2), welches wenigstens einen Stempel und wenigstens eine Matrize aufweist,
**dadurch gekennzeichnet,**
**dass** die Stanzmaschine (1) einen mobilen Remote-Laser-Schneidkopf (2) mit wenigstens einer Laserstrahlungsquelle (3) aufweist.

2. Stanzmaschine nach Anspruch 1,
**dadurch gekennzeichnet,**
**dass** der mobile Remote-Laser-Schneidkopf (2) wenigstens zwei schwenkbar gelagerte Spiegel (23, 24) aufweist.

3. Stanzmaschine nach Anspruch 1 oder 2,
**dadurch gekennzeichnet,**
**dass** die Spiegel (23, 24) rotatorisch angetrieben sind.

4. Stanzmaschine nach Anspruch 2 oder 3,
**dadurch gekennzeichnet,**
**dass** der erste Spiegel (23) derart im Remote-Laser-Schneidkopf (2) angeordnet ist, dass der durch eine lichtdichte Öffnung in dessen Gehäuse einfallende Laserstrahl (5) auf diesen trifft und in +/-X-Richtung, d.h. in der Horizontale, abgelenkt wird.

5. Stanzmaschine nach Anspruch 2, 3 oder 4,
**dadurch gekennzeichnet,**
**dass** der zweite Spiegel (24) derart im Remote-Laser-Schneidkopf (2) angeordnet ist, dass der vom ersten Spiegel (23) in +/-X-Richtung abgelenkte Laserstrahl (5) auf den zweiten Spiegel (24) trifft, der größer als der erste Spiegel (23) ist, und in +/-Y-Richtung, d.h. in die Vertikale, schwenkbar ist.

6. Stanzmaschine nach einem oder mehreren der Ansprüche 1 bis 5,
**dadurch gekennzeichnet,**
**dass** der mobile Remote-Laser-Schneidkopf (2) wenigstens eine Linse (4) aufweist.

7. Stanzmaschine nach einem oder mehreren der Ansprüche 1 bis 6,
**dadurch gekennzeichnet,**
**dass** die Linse (4) als F-Theta-Linse und/oder Telezentrische- F-Theta-Linse (4) ausgebildet ist.

8. Stanzmaschine nach einem oder mehreren der Ansprüche 1 bis 7,
**dadurch gekennzeichnet,**
**dass** ein Betriebsmodus der Stanzmaschine (1) eine Materialbearbeitung mit dem Stanzwerkzeug und ein weiterer Betriebsmodus die Bearbeitung mit dem mobilen Remote-Laser-Schneidkopf (2) vorsieht.

9. Stanzmaschine nach einem oder mehreren der Ansprüche 1 bis 8,
**dadurch gekennzeichnet,**
**dass** eine flexible Halterung (19) für den mobilen Remote-Laser-Schneidkopf (5) vorgesehen ist.

10. Stanzmaschine nach einem oder mehreren der Ansprüche 1 bis 9,
**dadurch gekennzeichnet,**
**dass** eine Absaugeinheit (12) vorgesehen ist.

11. Stanzmaschine nach einem oder mehreren der Ansprüche 1 bis 10,
**dadurch gekennzeichnet,**
**dass** eine Laserschutzwand (11) vorgesehen ist.

12. Stanzmaschine nach einem oder mehreren der Ansprüche 1 bis 11,
**dadurch gekennzeichnet,**
**dass** der mobile Remote-Laser-Schneidkopf (2) innerhalb der Stanzmaschine (1) angeordnet ist.

13. Remote-Laser-Schneidkopf mit wenigstens einer Laserstrahlungsquelle,
**dadurch gekennzeichnet,**
**dass** dieser an oder in eine Stanzmaschine (1) mit wenigstens einem Stanzwerkzeug, welches wenigstens einen Stempel und wenigstens eine Matrize aufweist, an- oder eingebaut werden kann.

14. Verfahren zur Materialbearbeitung,
**dadurch gekennzeichnet,**
**dass** das Material in einer Stanzmaschine (1) bearbeitet wird, wobei die Bearbeitung wahlweise mit einem Stanzwerkzeug, welches wenigstens einen Stempel und wenigstens eine Matrize aufweist, und/oder durch einen mobilen Remote-Laser-Schneidkopf (2) mit wenigstens einer Laserstrahlungsquelle (3) erfolgt.

15. Verfahren nach Anspruch 14,
**dadurch gekennzeichnet,**
**dass** die Laserstrahlungsquelle (3) Laserstrahlung (5) bereitstellt, die mit wenigstens zwei schwenkbar gelagerten Spiegeln (23, 24) auf dem Material positionierbar ist, wobei die Schwenkbewegungen der Spiegel (23, 24) unabhängig voneinander einstellbar sind.

16. Verfahren nach Anspruch 14 oder 15,
**dadurch gekennzeichnet,**
**dass** die Laserstrahlung (5) vor dem Auftreffen auf dem Material durch wenigstens eine Linse (4) propagiert.

17. Verfahren nach Anspruch 16,
**dadurch gekennzeichnet,**
**dass** die Linse (4) eine F-Theta-Linse und/oder telezentrische F-Theta-Linse (4) ist, um die Laserstrahlung (5) auf dem Material zu fokussieren.

18. Verfahren nach einem oder mehreren der Ansprüche 14 bis 17,
**dadurch gekennzeichnet,**
**dass** die Position des mobilen Remote-Laser-Schneidkopfs (2) innerhalb der Stanzmaschine (1) variiert.
